**Europäisches Patentamt**

**European Patent Office**

**Office européen des brevets**

(19)

(11) Veröffentlichungsnummer: **0 084 607**
**B1**

(12) # EUROPÄISCHE PATENTSCHRIFT

(45) Veröffentlichungstag der Patentschrift:
**15.10.86**

(51) Int. Cl.⁴: **B 23 C 5/22**

(21) Anmeldenummer: **82109678.1**

(22) Anmeldetag: **20.10.82**

(54) Fräswerkzeug.

(30) Priorität: **07.01.82 DE 3200191**

(43) Veröffentlichungstag der Anmeldung:
**03.08.83 Patentblatt 83/31**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
CH-A-599 820
DE-A-2 921 106
FR-A-1 561 415
GB-A-1 254 578
GB-A-1 532 238
US-A-2 506 338
US-A-2 852 962
US-A-3 633 258

(73) Patentinhaber: **Zettl, Otto, jun., Fellenbergstrasse 9, D-8969 Reicholzried (DE)**

(72) Erfinder: **Zettl, Otto, jun., Fellenbergstrasse 9, D-8969 Reicholzried (DE)**

(74) Vertreter: **Hübner, Hans- Jürgen, Dipl.- Ing., Mozartstrasse 21, D-8960 Kempten Allgäu (DE)**

LIBER, STOCKHOLM 1986

## Beschreibung

Die Erfindung betrifft ein Fräswerkzeug bestehend aus einem Schaft und einer mit am Umfang Schneidzähne sowie ein Zentralloch aufweisenden Fräsplatte, die am Vorderende des Schaftes in einer geometrischen Normalebene zur Schaftachse relativ undrehbar befestigt ist.

Ein derartiges Fräswerkzeug ist aus der US-A-2 852 962 bekannt. Bei ihm ist das Zentralloch der Fräsplatte so groß ausgebildet, daß es das Vorderende des Schaftes, aufnehmen kann. Die Befestigung der Fräsplatte am Schaft erfolgt über einen Schrumpfvorgang. Ein Auswechseln der Fräsplatte ist beim bekannten Fräswerkzeug nicht möglich, jedenfalls nicht ohne eine zeitaufwendige Wärmebehandlung, die am Einsatzort nicht durchgeführt werden kann. Außerdem besteht die Gefahr, daß bei Erwärmung während des Betriebes der Schrumpf-Klemmsitz verloren geht und sich die Fräsplatte vom Schaft löst.

Aus der GB-A-1 254 578 ist ein gattungsfremdes Fräswerkzeug bekannt, bei dem mehrere Fräsplatten am Umfang eines Scheibenfräsers formschlüssig gehalten sind.

In der Scheibe des Scheibenfräsers sind angenähert dreieckförmige flache Ausnehmungen vorgesehen, in die entsprechend konturierte Fräsplatten eingesetzt sind, die ein Zentralloch aufweisen, in das von einer Seite eine Gewindehülse eingesetzt ist, in die von der anderen Seite eine Schraube eingeschraubt ist. Aufgrund des notwendigerweise großen Durchmessers der Scheibe können mit einem solchen Scheibenfräser keine schmalen Nuten in einem sehr kleinen Durchmesserbereich gefräst werden.

Aufgabe der Erfindung ist es, das Fräswerkzeug der eingangs genannten Art so auszubilden, daß die Fräsplatte sicher am Schaft befestigt werden kann und daß ein schnelles Auswechseln am Einsatzort mit wenigen Handgriffen möglich ist, ohne den Schaft aus der Fräsmaschine entfernen zu müssen.

Diese Aufgabe wird erfindungsgemäß dadurch gelöst,daß an der vorderen Stirnfläche des Schaftes eine, durch mehrere im Abstand liegende axiale Vorsprünge gebildete unrunde Ausnehmung ausgebildet ist, in der die ebenfalls entsprechend unrund ausgebildete Fräsplatte derart formschlüssig aufgenommen ist, daß einander zugewandte Seitenflächen der Fräsplatte und der Ausnehmung einander berühren und die Schneidzähne der Fräsplatte aus der Ausnehmung durch Umfangsöffnungen radial herausragen und über den Umfang des Schaftes vorstehen und daß die Fräsplatte mit einer ihr Zentralloch durchsetzenden Schraube am Schaft angeschraubt ist.

Erfindungsgemäß ist die Fräsplatte am Schaft formschlüssig und nicht kraftschlüssig gehalten. Der Formschluß sichert die Fräsplatte am Schaft besser als ein Kraftschluß, da er auch bei höheren Temperaturen erhalten bleibt.

Gleichwohl wird ein Schnellwechselsystem geschaffen, das ein Austauschen der Fräsplatten in kurzer Zeit und mit wenigen Handgriffen erlaubt, ohne daß der Schaft aus der Fräsmaschine entfernt werden muß, was bei numerisch gesteuerten Maschinen sehr wichtig ist. Schließlich ermöglicht die erfindungsgemäße Ausbildung sehr kleine Durchmesser der Schneidzähne, da diese nur unwesentlich über den Schaftdurchmesser vorstehen. Gemäß der eingangs genannten Druckschrift muß zwischen den Schneidzähnen und dem Zentralloch aus Festigkeitsgründen genügend Fleisch verbleiben, weswegen der Minimaldurchmesser vorliegender Erfindung nicht erreicht werden kann.

Eine Weiterbildung der Erfindung besteht darin, daß die Umfangskonturen der Ausnehmung und der Fräsplatte mit Ausnahme der durch die Umfangsöffnungen herausragenden Schneidzähne übereinstimmen.

Eine Ausgestaltung besteht nun darin, daß die Außenkontur der Fräsplatte im Bereich des Schaftvorderendes drei geradlinige Seitenflächen aufweist, die mit den Seiten eines imaginären gleichseitigen Dreiecks zusammenfallen. Damit wird erreicht, daß die Formschlußausbildung einfach hergestellt werden kann.

Gemäß einer weiteren Ausgestaltung ist vorgesehen daß jede geradlinige Seitenfläche der Fräsplatte an einem Ende bis an den Außendurchmesser des Schaftvorderendes heran und am anderen Ende darüberhinaus reicht und daß letzteres Ende der geradlinigen Seitenfläche die Hinterfläche des Schneidzahnes bildet, zwischen der und der Vorderfläche die Schneidkante des Schneidzahnes gebildet ist. Damit werden auch bei sehr kleinen Fräsplatten eine hohe Festigkeit und damit eine lange Standzeit erzielt.

Weiterbildungen bestehen noch darin, daß die Vorderfläche des Schneidzahnes konkav gewölbt ist und daß die konkave Vorderfläche des Schneidzahnes am äußeren Schneidzahnende etwa tangential an eine imaginäre Axialebene der Fräsplatte heranreicht und in dieser ausläuft. Mit diesen Ausbildungen lassen sich hohe Schnittleistungen auch bei kleinstdimensionierten Fräsplatten erreichen.

Noch eine Ausgestaltung besteht darin, daß die konkave Vorderfläche des Schneidzahnes an das Ende einer der beiden weiteren äußeren Seitenflächen der Fräsplatte anschließt, daß die Anschlußkante auf dem Außendurchmesser des Schaftvorderendes liegt und daß die konkave Vorderfläche etwa tangential zum Außendurchmesser des Schaftvorderendes ausläuft. Mit diesen Merkmalen wird erreicht, daß die Schneidzähne trotz minimaler Radialerstreckung eine genügende Festigkeit erhalten.

Schließlich ist noch vorteilhaft, daß die Tiefe der Ausnehmung gleich der Dicke der Fräsplatte ist und daß der Kopf der Schraube in der Fräsplatte aufgenommen ist. Diese Merkmale führen zu dem Vorteil, daß extrem schmale Nuten unmittelbar am Boden eines Sackloches gefräst werden können.

Anhand der Zeichnung, die ein Ausführungsbeispiel darstellt, sei die Erfindung näher beschrieben.

Es zeigt:

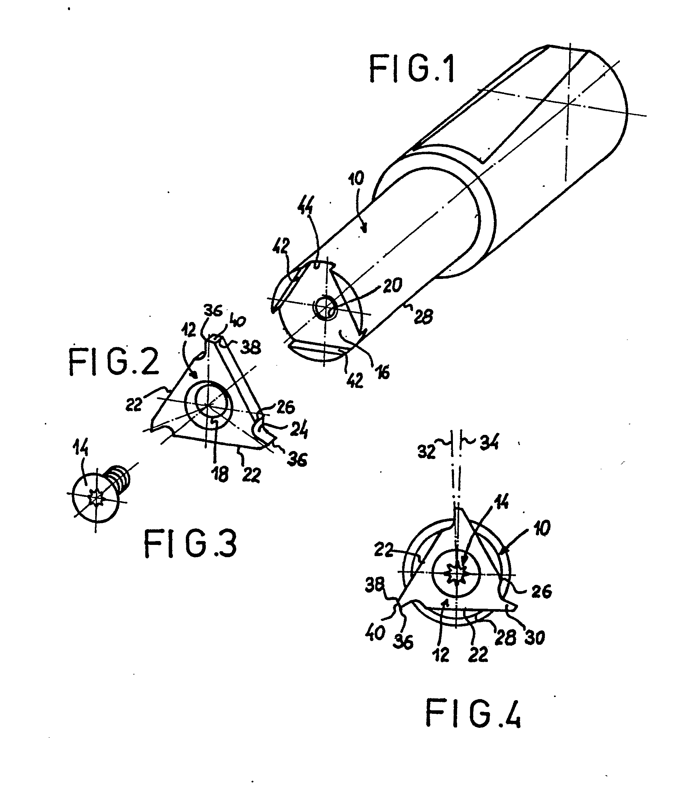

Fig. 1 eine perspektivische Ansicht eines, in einem Spannfutter einspannbaren Fräserschaftes

Fig. 2 eine perspektivische Ansicht einer am Schaft zu befestigenden Wechsel-Fräsplatte,

Fig. 3 eine, die Wechsel-Fräsplatte am Schaft sichernde Schraube und

Fig. 4 eine stirnseitige Ansicht des aus den Teilen gemäß Figuren 1 bis 3 aufgebauten Schaftfräsers

Ein Schaft 10 hat eine vordere stirnseitige Ausnehmung 16, in die eine Fräsplatte 12 in axialer Richtung eingesetzt werden kann und dort formschlüssig aufgenommen ist. Die Tiefe der Ausnehmung 16 stimmt mit der Dicke der Fräsplatte 12 überein, so daß ein bündiger Abschluß erzielt wird. Die Fräsplatte 12 hat ein Zentralloch 18, das konisch ausgebildet ist. Eine Schraube 14 dient zum Befestigen der Fräsplatte 12 am Schaft 10, wobei die Schraube 14 in ein zentrales Gewindeloch 20 des Schaftes 10 eingeschraubt werden kann. Im montierten Zustand ist der Schraubenkopf der Schraube 14 voll im Zentralloch 18 der Fräsplatte 12 aufgenommen, so daß die Stirnflächen von Schaft 10, Fräsplatte 12 und Kopf der Schraube 14 etwa bündig liegen.

Die Fräsplatte 12 hat drei äußere geradlinige Seitenflächen 22, die jeweils einen Winkel von 60° miteinander bilden. Die geometrische Achse durchsetzt zentrisch das Zentralloch 18 und das aus den drei Seitenflächen 22 gebildete Dreieck ist symmetrisch zu dieser Achse angeordnet.

An jedes "Dreieckseck" der Fräsplatte 12 wird ein Schneidzahn 30 gebildet, der rückseitig durch die geradlinige Seitenfläche 22 und vorderseitig durch eine konkave Vorderfläche 24 begrenzt wird. Die konkave Vorderfläche 24 bilde jeweils mit einer Seitenfläche 22 eine Anschlußkante 26, die genau auf dem Außendurchmesser 28 des Schaftvorderendes liegt. Die geradlinige Seitenfläche 22 reicht also an ihrem einen Ende nur bis an den Außendurchmesser 28 des Schaftvorderendes, während das andere Ende außerhalb dieses Außendurchmessers 28 liegt.

Die drei Schneidezähne 30 stehen im montierten Zustand (Fig. 4) über den Außendurchmesser 28 des Schaftvorderendes radial nach außen vor.

Die konkaven Vorderflächen 24 laufen nach außen im wesentlichen radial aus, tangieren also eine imaginäre Axialebene 32, die einen kleinen Winkel mit der die Achse des Schaftes 10 enthaltenden Senkrechten der gegenüberliegenden Seitenfläche 22 bildet. Die äußere Schneidkante 36 jeder konkaven Vorderfläche 24 liegt in der imaginären Verlängerung jeder Seitenfläche 22. Die benachbarte rückseitige Außenkante 38 der anschließenden Seitenfläche 22 liegt höchstens auf demselben Außendurchmesser wie die Schneidkante 36 oder ist vorzugsweise geringfügig nach innen versetzt. Die Umfangsflächen 40 der Schneidzähne 30 sind entsprechend geschliffen.

Die Schaftausnehmung 16 weist drei geradlinige Seitenflächen 42 auf, die ebenfalls mit den Seiten eines gleichseitigen Dreiecks zusammenfallen und deren Mittelsenkrechten sich in der Schaftachse schneiden. Die Seitenflächen 42 sind also gleich lang und symmetrisch angeordnet. Sie reichen bis an den Außenumfang 28 des Schaftvorderendes heran. Zwei benachbarte Seitenflächen 42 begrenzen im Bereich des Aussendurchmessers 28 eine Umfangsöffnung 44. Die Umfangslänge dieser Öffnung 44 ist gleich dem Umfangsabstand der Anschlußkante 26 der Fräsplatte 12 und der imaginären Schnittlinie des Außendurchmessers 28 mit der Seitenfläche 22.

Die Fräsplatte 12 paßt somit genau in die Ausnehmung 16 und ist in dieser lediglich axial, jedoch weder radial noch umfangsmäßig verschiebbar. Die Sicherung gegen axiale Verschiebung der Platte 12 übernimmt die Schraube 14.

## Patentansprüche

1. Fräswerkzeug bestehend aus einem Schaft (10) und einer mit am Umfang Schneidzähne (30) sowie ein Zentralloch (18) aufweisenden Fräsplatte (12), die am Vorderende des Schaftes (10) in einer geometrischen Normalebene zur Schaftachse relativ undrehbar befestigt ist, dadurch gekennzeichnet, daß an der vorderen Stirnfläche des Schaftes (10) eine, durch mehrere im Abstand liegende axiale Vorsprünge gebildete unrunde Ausnehmung (16) ausgebildet ist, in der die ebenfalls entsprechend unrund ausgebildete Fräsplatte (12) derart formschlüssig aufgenommen ist, daß einander zugewandte Seitenflächen (22, 42) der Fräsplatte (12) und der Ausnehmung (16) einander berühren und die Schneidzähne (30) der Fräsplatte (12) aus der Ausnehmung (16) durch Umfangsöffnungen (44) radial herausragen und über den Umfang des Schaftes (10) vorstehen und daß die Fräsplatte (12) mit einer ihr Zentralloch (18) durchsetzenden Schraube (14) am Schaft (10) angeschraubt ist.

2. Fräswerkzeug nach Anspruch 1, dadurch gekennzeichnet, daß die Umfangskonturen der Ausnehmung (16) und der Fräsplatte (12) mit Ausnahme der durch die Umfangsöffnungen (44) herausragenden Schneidzähne (30) übereinstimmten.

3. Fräswerkzeug nach Anspruch 1 oder 2, · dadurch gekennzeichnet, daß die Außenkontur der Fräsplatte (12) im Bereich des Schaftvorderendes drei geradlinige Seitenflächen (22) aufweist, die mit den Seiten eines imaginären gleichseitigen Dreiecks zusammenfallen.

4. Fräswerkzeug nach Anspruch 3, dadurch gekennzeichnet, daß jede geradlinige Seitenfläche (22) der Fräsplatte (12) an einem Ende bis an den Außendurchmesser des Schaftvorderendes heran und am anderen Ende darüberhinaus reicht und daß letzteres Ende der geradlinigen Seitenfläche (22) die Hinterfläche des Schneidzahnes (30) bildet, zwischen der und der Vorderfläche (24) die Schneidkante (36) des Schneidzahnes (30) gebildet ist.

5. Fräswerkzeug nach Anspruch 4, dadurch gekennzeichnet, daß die Vorderfläche (24) des Schneidzahnes (30) konkav gewölbt ist.

6. Fräswerkzeug nach Anspruch 5, dadurch gekennzeichnet, daß die konkave Vorderfläche (24) des Schneidzahnes (30) am äußeren Schneidzahnende etwa tangential an eine imaginäre Axialebene (32) der Fräsplatte (12) heranreicht und in dieser ausläuft.

7. Fräswerkzeug nach Anspruch 5 oder 6, dadurch gekennzeichnet, daß die konkave Vorderfläche (24) des Schneidzahnes (30) an das Ende einer der beiden weiteren äußeren Seitenflächen (22) der Fräsplatte (12) anschließt, daß die Anschlußkante (26) auf dem Außendurchmesser (28) des Schaftvorderendes liegt und daß die konkave Vorderfläche (24) etwa tangential zum Außendurchmesser (28) des Schaftvorderendes ausläuft.

8. Fräswerkzeug nach einem der Ansprüche 1 bis 7, dadurch gekennzeichnet, daß die Tiefe der Ausnehmung (16) gleich der Dicke der Fräsplatte (12) ist.

9. Fräswerkzeug nach einem der Ansprüche 1 bis 8, dadurch gekennzeichnet, daß der Kopf der Schraube (14) in der Fräsplatte (12) aufgenommen ist.


## Claims

1. A milling cutter consisting of a shaft (10) and a cutter plate (12) provided at its periphery with a plurality of cutting teeth (30) and with a central bore (18), the cutter plate non-rotatably arranged at a front end of the shaft (10) within a geometrical rectangular plane with respect to the axis of the shaft characterized in that at a front face of the shaft (10) a non-circular recess (16) is formed by means of a plurality of axial projections spaced from one another, the cutter plate (12) also in a corresponding non-circular design received in the recess (16) in such a form-fit manner that adjacent side faces (22, 42) of the cutter plate (12) and of the recess (16) contact one another and the cutting teeth (30) of the cutter plate (12) project radially from the recess (16) through peripheral gaps (44) and beyond the periphery of the shaft (10) and that the cutter plate (12) is screwed at the shaft (10) by means of a screw bolt (14) passing through the central bore (18).

2. A milling cutter as claimed in claim 1, characterized in that the peripheral shapes of the recess (16) and the cutter plate (12) with the exception of the teeth (30) projecting outwards through the peripheral gaps (44) coincide with one another.

3. A milling cutter as claimed in claim 1 or 2, characterized in that the outer periphery of the cutter plate (12) in the area of the shaft front end comprises three linear side faces (22) coinciding with the sides of an imaginary equilateral triangle.

4. A milling cutter as claimed in claim 3, characterized in that each linear side face (22) of the cutter plate (12) at one end extends up to the shaft front end diameter and at the other end extends beyond said diameter and that the latter end of the linear side face (22) forms the rearward face of the cutting tooth (30), between which and the front face (24) the cutting edge (36) of the cutting tooth (30) is formed.

5. A milling cutter as claimed in claim 4, characterized in that the front face (24) of the cutting tooth (30) is concavely curved.

6. A milling cutter as claimed in claim 5, characterized in that the concave front face (24) of the cutting tooth (30) runs substantially tangentially into an imaginary axial plane (32) of the cutter plate (12) at the outer cutting tooth end and ends in that plane.

7. A milling cutter as claimed in claim 5 or 6 characterized in that the concave front face (24) of the cutting tooth (30) is connected with the end of one of the two other outer side faces (22) of the cutter plate (12), that the connecting edge (26) lies on the outer diameter (28) of the shaft front end and that the concave front face (24) opens substantially tangentially in the outer diameter (28) of the shaft front end.

8. A milling cutter as claimed in claims 1 to 7, characterized in that the depth of the recess (16) is equal with the thickness of the cutter plate (12).

9. A milling cutter as claimed in claims 1 to 8, characterized in that the head of the screw bolt (14) is received in the cutter plate (12).


## Revendications

1. Outil à fraiser se composant d'une tige (10) et d'une plaquette à fraiser (12) garnie de dents de coupe (30) sur la périphérie, ainsi que dotée d'une ouverture centrale (18) et fixée d'une manière relativement fixe sur l'extrémité avant de la tige (10) dans un plan géométrique perpendiculaire à l'axe de la tige, caractérisé en ca qu'on a creusé, sur la surface frontale avant de la tige (10), un évidement (16) non rond, formé par plusieurs saillies axiales distantes l'une de l'autre et dans lequel la plaquette à fraiser (12) réalisée également par analogie sous une forme non ronde est disposée par clabotage de telle sorte que les surfaces latérales (22, 42) orientées l'une vers l'autre de la plaquette à fraiser (12) et de l'évidement (16) se touchent l'une l'autre et que les dents de coupe (30) de la plaquette à fraiser (12) fassent saillie au-delà de l'évidement (16) radialement par des ouvertures périphériques (44) et débordent au-delà de la périphérie de la tige (10) et en ce que la plaquette à fraiser (12) est vissée sur la tige (10) par une vis (14) traversant son ouverture centrale (18).

2. Outil à fraiser selon la revendication 1, caractérisé en ce que les contours périphériques de l'évidement (16) et de la plaquette à fraiser (12) coincident à l'exception des dents de coupe (30) faisant saillie par les ouvertures périphériques (44).

3. Outil à fraiser selon l'une quelconque des revendications 1 et 2, caractérisé en ce que le contour extérieur de la plaquette à fraiser (12) comprend, dans la zone de l'extrémité avant de la tige, trois surfaces latérales rectilignes (22) qui coïncident avec les côtés d'un triangle équilatéral imaginaire.

4. Outil à fraiser selon la revendication 5, caractérisé en ce que chaque surface latérale rectiligne (22) de la plaquette à fraiser (12) se prolonge, par une extrémité, jusqu'au diamètre exterieur de l'extrémité avant de la tige et, par l'autre extrémité, au-delà de ce diamètre et en ce que l'autre extrémité de la surface latérale réctiligne (22) forme la surface arrière de la dent de coupe (30), entre laquelle et la surface avant (24) est formé le tranchant (36) de la dent de coupe (30).

5. Outil à fraiser selon la revendication 4, caractérisé en ce que la surface avant (24) de la dent de coupe (30) a une forme concave.

6. Outil à fraiser selon la revendication 5, caractérisé en ce que la surface avant concave (24) de la dent de coupe (30) approche de l'extrémité extérieure de la dent de coupe presque tangentillement à un plan axial imaginaire (32) de la plaquette à fraiser (12) et se termine dans celui-ci.

7. Outil à fraiser selon l'une quelconque des revendications 5 et 6, caractérisé en ce que la surface avant concave (24) de la dent de coupe (30) se raccorde à l'extrémité d'une des deux autres surfaces latérales extérieures (22) de la plaquette à fraiser (12), en ce que l'arête de jonction (26) se trouve sur le diamètre extérieur (28) de l'extrémité avant de la tige et en ce que la surface avant concave (24) se termine presque tangentiellement au diamètre extérieur (28) de l'extrémité avant de la tige.

8. Outil à fraiser selon l'une quelconque des revendications 1 à 7, caractérisé en ce que la profondeur de l'évidement (16) est égal à l'épaisseur de la plaquette à fraiser (12).

9. Outil à fraiser selon l'une quelconque des revendications 1 à 8, caractérisé en ce que la tête de la vis (14) est noyée dans la plaquette à fraiser (12).

FIG.1

FIG.2

FIG.3

FIG.4